# EUROPÄISCHE PATENTANMELDUNG

(11) **EP 4 699 989 A1**
(43) Veröffentlichungstag der Anmeldung: **25.02.2026**
(21) Anmeldenummer: 25196117.3
(22) Anmeldetag: 14.08.2025
(51) Int. Cl.: C02F 11/122, B01D 25/12, C02F 1/52, C02F 103/14

(54) **VORRICHTUNG ZUR BEHANDLUNG VON FÄLLUNGSSCHLAMMSEDIMENT, VERWENDUNG UND VERFAHREN**

(30) Priorität: 20.08.2024 DE 102024002703
(71) Anmelder: Almawatech GmbH, 64832 Babenhausen (DE)
(72) Erfinder: Milosevic, Maksim, 63500 Seligenstadt (DE); Hoffmann, Dominik, 64823 Groß-Umstadt (DE)
(74) Vertreter: Nitz, Astrid

(57) **Zusammenfassung**

Vorrichtung zur Behandlung von Fällungsschlammsediment aus einer Abwasserbehandlung, insbesondere von Farb- und Lackabwässern und/oder Beschichtungsstoffen und/oder flüssige Sonderabfälle, umfassend Kammerfilterpressen mit Filtertüchern, durch die der Fällungsschlammsediment zu behandeln ist, wobei auf jeweils ein Filtertuch zumindest eine entfernbare Anschwemmschicht eines Filtrierhilfsmittels in einer vorbestimmten Konzentration aufgebracht ist.

## Beschreibung

Die Erfindung betrifft eine Vorrichtung zur Behandlung von Fällungsschlammsediment nach dem Oberbegriff von Anspruch 1, Verwendung nach dem Oberbegriff von Anspruch 7 und ein verfahren nach dem Oberbegriff von Anspruch 8.

Abwässer aus der Farb-, Lack- und Oberflächentechnik sowie aus der Behandlung flüssiger Sonderabfälle enthalten eine Vielzahl von Schadstoffen, die vor der Indirekteinleitung in das kommunale Kanalnetz oder der Direkteinleitung in ein Gewässer weitgehend entfernt werden müssen. Zu den typischen Verunreinigungen zählen Schwermetalle, Farbpigmente, hohe CSB-Werte, AOX, Kohlenwasserstoffe und weitere Verunreinigungen. Regelmäßig erfolgt die Reinigung solcher Abwässer durch Präzipitation mit Neutralisierung und Flockung. Durch die Zugabe von Fällungsmitteln auf Basis von Metallsalzen reagieren gelöste Schadstoffe und bilden feste Partikel als Fällungsprodukte. Nach einer Neutralisation des pH-Werts folgt regelmäßig die Flockung, bei der die gebildeten Fällungsprodukte Flockungsmittel wie Polyacrylamide oder kationische und anionische Polymere zu größeren Flocken aggregiert werden. Der entstandene Fällungsschlamm wird sedimentiert und anschließend als Fällungsschlammsediment weiterbehandelt. Er weist im Allgemeinen einen Trockensubstanzgehalt von 1 - 10 % auf.

Die Aufgabe der vorliegenden Erfindung ist es, eine sichere und zuverlässige Vorrichtung zur Behandlung von Fällungsschlammsediment bereitzustellen.

Die Aufgabe wird gelöst durch eine Vorrichtung zur Behandlung von Fällungsschlammsediment aus einer Abwasserbehandlung, insbesondere von Farb- und Lackabwässern und/oder Beschichtungsstoffen und/oder flüssige Sonderabfälle, umfassend Kammerfilterpressen mit Filtertüchern, durch die das Fällungsschlammsediment zu behandeln ist, wobei auf jeweils ein Filtertuch zumindest eine entfernbare Anschwemmschicht eines Filtrierhilfsmittels in einer vorbestimmten Konzentration aufgebracht ist.

Durch die vorgeschlagene effektive Vorrichtung zu Fällungschlammsedimentbehandlung, insbesondere mit einer Konzentration von 1-10% Trockensubstanz, insbesondere 2-4 %, von schadstoffbelasteten Sonderabfällen kann in umweltfreundlicher Weise der Wassergehalt des Fällungsschlammsediments reduziert werden, sowie weiterhin durch eine zusätzliche Reinigung aufgrund der adsorptiven Eigenschaften der Filtrierhilfsmittel eine weiteren Elimination von Schadstoffen erreicht was die zu entsorgende Abfallmenge insgesamt reduziert. Die Kammerfilterpressen bestehen aus einer Reihe von parallel angeordneten vertikalen Platten, die durch Filtertücher voneinander getrennt sind. Diese Platten sind in einem Rahmen montiert, der die Platten während des Filtrationsprozesses mit einem hohen Schließdruck von bis zu 450 bar zusammendrückt. Das Filtrierhilfsmittel mit den porösen Materialien in einer vorbestimmten Konzentration wird in einer vorbestimmten Schichtdicke, vorteilhaft zwischen 0,1-3 mm, auf die Filtertücher aufgebracht. Anschließend wird der zu entwässernde Fällungsschlammsediment in die Kammern zwischen die Platten gepumpt und der hohe Druck beim Schließen der Kammern bewirkt, dass das Wasser durch die beschichteten Filtertücher austritt, und abgeleitet wird, während die Feststoffe zurückgehalten werden und sich als Filterkuchen auf den beschichteten Filtertüchern absetzen, insbesondere unter Anwendung von Prozessdrücken, mit dem das Fällungsschlammsediment eingeleitet wird, bis etwa zu 16 bar Förderdruck der Beschickung mit Fällungsschlammsediment, insbesondere angezeigt an einem Füllstanddruckmesser. Die Beschickung der parallel angeordneten Filterkammern erfolgt im Allgemeinen bis der Förderdruck der Beschickung mit Fällungsschlammsediment einen Druckbereich von etwa 8-16 bar erreicht hat oder kein Filtrat im Ablauf der Kammerfilterpresse detektiert werden kann. Nach Abschluss des Filtrationsprozesses werden die Filterkammern geöffnet und der Filterkuchen auf den beschichteten Filtertüchern wird erfindungsgemäß leicht und sicher aus den Kammern entfernt. Durch die vorgeschlagene Vorrichtung sind selbst die schwer zu behandelnden Substanzen aus der Farb-, Lack- und Oberflächentechnik in Form von Fällungsschlammsedimenten sowie aus der Behandlung flüssiger Sonderabfälle, die eine Vielzahl von Schadstoffen enthalten, als Filterkuchen herauszutrennen, ohne dass die verwendeten Filtertücher zugesetzt werden und unter hohem Aufwand zu reinigen wären.

Durch die vorgeschlagene Vorrichtung wird eine Verstopfung und Verklebung der Filtertücher durch sehr feine Partikel, wie organische Partikel und mineralische Ablagerungen, aus den Fällungsschlammsedimenten verhindert. Somit werden erhöhte Druckverluste an den Filtern vermieden, d.h. der Druck, der erforderlich ist, um das Wasser aus den Sedimentschlämmen durch die beschichteten Filtertücher zu drücken, steigt nicht so stark an. Die Entwässerungsgrade werde effizienter, da der Schlamm effektiv entfernt werden kann, und es bleibt somit weniger Feuchtigkeit im Filterkuchen zurück. Ein Anhaften des Filterkuchen an den Filtertüchern wird vermindert, sein Ablösen wird erleichtert und die Reinigung der Tücher weniger zeitaufwändig und kostengünstiger. Der Verschleiß der Filtertücher wird verringert. Ein zu hoher Prozessdruck und eine häufige Reinigung aufgrund des anhaftenden Filterkuchens werden vermieden, wodurch die Filtertücher weniger häufig ersetzt werden müssen. Durch die vorgeschlagene Erfindung wird die Verstopfung und Verklebung der Filtertücher minimiert und die Ablösbarkeit des Filterkuchens von den Filtertüchern signifikant verbessert. Dies führt zu einer Steigerung der Filtrationseffizienz und Reduktion der Betriebskosten.

Vorteilhaft ist es, wenn das Filtrierhilfsmittel umfasst Kieselgur und/oder Perlit und/oder Zellulose und/oder Bentonit und/oder Aktivkohle oder eine Mischung daraus.

Vorteilhaft ist es, wenn die Konzentration des Filtrierhilfsmittels beträgt etwa 400 - etwa 1.200 g/m² bezogen auf die Fläche des Filtertuches.

Vorteilhaft ist es, wenn die Dicke der Anschwemmschicht des Filtrierhilfsmittels beträgt etwa 0,2 - etwa 3 mm, insbesondere etwa 0,5 - etwa 3 mm.

Vorteilhaft ist es, wenn das Filtrierhilfsmittel eine Konzentration aufweist von etwa 0,1 - etwa 3%, insbesondere etwa 0,5 - etwa 3%, insbesondere etwa 1 bis etwa 3%.

Die Aufgabe wird gelöst durch eine Verwendung von Filtrierhilfsmittel umfassend insbesondere Kieselgur und/oder Perlit und/oder Zellulose und/oder Bentonit und/oder Aktivkohle in Kammerfilterpressen für die Filtrierung von Fällungsschlammsediment aus einer Abwasserbehandlung von Farb- und Lackabwässern und/oder Beschichtungsstoffe und/oder flüssige Sonderabfälle, wobei das Filtrierhilfsmittel in einer vorbestimmten Konzentration von etwa 0,1 - etwa 3%, insbesondere etwa 0,5 - etwa 3%, insbesondere etwa 1 bis etwa 3%, durch Anschwemmung auf Filtertücher der Kammerfilterpressen aufgebracht wird, insbesondere mit einer Schichtdicke des Filtrierhilfsmittels auf dem Filtertuch von etwa 0,5 - etwa 3 mm, vor dem Einbringen des zu reinigenden Fällungsschlammsediments aus einer Abwasserbehandlung.

Es wird ein Filtrierhilfsmittel verwendet um eine dünne Schicht, vorteilhaft zwischen 0,5 bis 3 mm Dicke, auf den Filtertüchern der Kammerfilterpresse aufzubringen, nämlich durch Anschwemmung der Kammerfilterpresse. Die vorgeschlagenen Filtrierhilfsmittel weisen eine hohe Porosität und adsorptive Eigenschaften auf, welche nicht nur eine verbesserte Filtration durch leichtere Durchströmung ermöglichen, sondern auch nach Abschluss der Entwässerung in der Kammerfilterpresse ein einfaches Ablösen des Filterkuchens von den Filtertüchern gestatten. Durch die Verwendung dieser Filtrierhilfsmittel wird der Filtrationsprozess effizienter und die Betriebskosten werden reduziert. Der geringere mechanische Verschleiß der Filtertücher verlängert deren Lebensdauer, und die adsorptiven Eigenschaften der Filtrierhilfsmittel tragen zur zusätzlichen umweltschonenden Reinigung von Schadstoffen aus dem Schlammsediment bei.

Die Aufgabe wird weiter gelöst durch ein Verfahren zum Filtern von Fällungsschlammsediments aus einer Abwasserbehandlung in Kammerfilterpressen, wobei vor der Einbringung des Fällungsschlammsediments eine Anschwemmschicht eines Filtrierhilfsmittels in einer vorbestimmten Konzentration auf Filtertücher der Kammerfilterpressen insbesondere in einer Schichtdicke von etwa 0,5 bis etwa 3 mm aufgebracht wird, insbesondere mit Hilfe von Umschaltmittels an einem Zulauf zu der Kammerfilterpresse, insbesondere mit ansteuerbaren Ventilen und/oder ansteuerbaren Schiebern im Zulauf der Kammerfilterpresse.

Vorteilhaft ist es, wenn nach der Einbringung der Filtrierhilfsmittelschicht in einer Übergangsphase eine insbesondere kontinuierliche Zuleitung eines Gemisches von Filtrierhilfsmittel und Fällungsschlammsediment erfolgt oder durch das unterbrechungsfreie Umschalten von entsprechenden Ventilen und/oder Schieberstellungen ein unterbrechungsfreier Übergang zwischen Einbringung der Filtrierhilfsmittelschicht und Einbringen des Fällungssedimentschlammes erfolgt und anschließend in einer Entwässerungsphase insbesondere ausschließlich Fällungsschlammsediment in die Kammerfilterpresse eingeleitet und gepresst wird, insbesondere bis zu einem Prozessdruck von etwa 16 bar.

Zunächst erfolgt eine Anschwemmung der Kammerfilterpresse in einem meist Zulauf bei vorbestimmten Betriebsbedingungen mit einer vorbestimmten Mischung an Filtrierhilfsmittel, insbesondere beispielsweise Kieselgurlösung, weiterhin erfolgt in einem folgenden Schritt vorzugsweise eine Stabilisierung der Filtriermittelschicht durch eine unterbrechungsfreie kontinuierliche Umschaltung an dem Zulauf, insbesondere mittels Ventilen und Schiebern, auf eine Zuführung von Fällungsschlammsediment kombiniert mit einer zusätzlichen Filtermittelschichtbeschickung, anschließend erfolgt die abschließende Beschickung der Kammerfilterpresse mit dem zu entwässernden Fällungsschlammsediment.

Im Detail wird zum Ansetzen der Filtrierhilfsmittel-Suspension vorzugsweise in einfacher Weise das feste Filtrierhilfsmittel in einem gerührten Dosier- und Ansetzbehälter mit Wasser gemischt. Unter ständigem Rühren wird eine stabilisierte Suspension mit einer Filtrierhilfsmittelkonzentration von vorzugsweise 0,1 - 3% hergestellt, beispielsweise mithilfe eines Dispergator-Rührwerks. Anschließend erfolgt ein Anschwemmung der Filtertücher mittels Filtrierhilfsmittelsuspension vor dem Beschickungsprozess der Kammerfilterpresse mit dem zu entwässernden Fällungsschlammsediment zur Bildung einer Schicht eines Filtrierhilfsmittels auf den Filtertüchern. Die Beschickungsgeschwindigkeit der Filtrierhilfsmittelsuspension liegt zwischen 100 - 800 l/m² Filterfläche pro Stunde. Die auf den Filtertüchern aufzutragende Schicht an Filtrierhilfsmittel erhält vorzugsweise eine Dicke von etwa 0,2 bis etwa 3 mm. Als Filtrierhilfsmittel können vorteilhaft Kieselgur und/oder Perlit und/oder Zellulose und/oder Bentonit und/oder Aktivkohle oder Mischungen dieser Stoffe verwendet werden. Je nach Filtrierhilfsmittel und Anwendung beträgt die benötigte Menge an Filtrierhilfsmittel zwischen 400 - 1.200g/m². Durch die hohe Porosität und adsorptive Eigenschaften der aufgebrachten Filtriermittelschicht wird eine leichtere Durchströmung des Fällungssedimentwassers ermöglicht und nach Abschluss der Entwässerung das Ablösen des Filterkuchens von den Filtertüchern erleichtert. Die aufgebrachte Schicht reduziert durch die hohe Porosität den Druckverlust und ermöglicht eine effizientere Entwässerung. Der Betriebsaufwand des Verfahrens wird und der Reinigungsaufwand der Filtertücher reduziert und die Lebensdauer verlängert. Die optimierte Filtration reduziert den Energieverbrauch während des Entwässerungsprozesses.

Vorteilhaft ist es, wenn das Fällungsschlammsediment mit einem Prozessdruck von etwa 16 bar eingeleitet und gepresst wird.

Vorteilhaft ist es, wenn das Fällungsschlammsediment eine Temperatur im Bereich von etwa 5 - etwa 50°C aufweist.

Vorteilhaft ist es, wenn das Fällungsschlammsediment bei einer Filtrationsgeschwindigkeit in der Anschwemmung von etwa 100 - etwa 800 l/m²·h eingebracht wird.

Weitere Merkmale und Vorteile der Erfindung ergeben sich aus den Ansprüchen und der nachstehenden Beschreibung, in der Ausführungsbeispiele des Gegenstands der Erfindung näher erläutert sind.

Eine bevorzugte Ausführungsform kann beispielhaft folgendermaßen charakterisiert sein:
- Konzentration Filtrierhilfsmittel 0,1 - 3 % (Massenprozent)
- Filtrationsgeschwindigkeit Anschwemmung 100 - 800 l/m2·h (Liter Filtrationshilfsmittel pro m2 Filterfläche und Stunde)
- Filtrationshilfsmittel Dosierung 400 - 1.200 g/m2 (Gramm Filtrationshilfsmittel pro m2 Filterfläche)
- Dicke der Anschwemmschicht des Filtrierhilfsmittels auf dem Filtertuch 0,2 - 3 mm.

## Patentansprüche

1. Vorrichtung zur Behandlung von Fällungsschlammsediment aus einer Abwasserbehandlung, insbesondere von Farb- und Lackabwässern und/oder Beschichtungsstoffen und/oder flüssige Sonderabfälle, umfassend Kammerfilterpressen mit Filtertüchern, durch die der Fällungsschlammsediment zu behandeln ist, wobei auf jeweils ein Filtertuch zumindest eine entfernbare Anschwemmschicht eines Filtrierhilfsmittels in einer vorbestimmten Konzentration aufgebracht ist.

2. Vorrichtung nach Anspruch 1, **dadurch gekennzeichnet, dass** das Filtrierhilfsmittel umfasst Kieselgur und/oder Perlit und/oder Zellulose und/oder Bentonit und/oder Aktivkohle oder eine Mischung daraus.

3. Vorrichtung nach einem der Ansprüche 1 bis 2, **dadurch gekennzeichnet, dass** die Konzentration des Filtrierhilfsmittels beträgt etwa 400 - etwa 1.200 g/m² bezogen auf die Fläche des Filtertuches.

4. Vorrichtung nach der Ansprüche 1 bis 3, **dadurch gekennzeichnet, dass** die Dicke der Anschwemmschicht des Filtrierhilfsmittels beträgt etwa 0,2 - etwa 3 mm, insbesondere etwa 0,5 - etwa 3 mm.

5. Vorrichtung nach der Ansprüche 1 bis 4, **dadurch gekennzeichnet, dass** das Filtrierhilfsmittel eine Konzentration aufweist von etwa 0,1 - etwa 3%, insbesondere etwa 0,5 - etwa 3%, insbesondere etwa 1 bis etwa 3%.

6. Verwendung von Filtrierhilfsmittel umfassend insbesondere Kieselgur und/oder Perlit und/oder Zellulose und/oder Bentonit und/oder Aktivkohle in Kammerfilterpressen für die Filtrierung von Fällungsschlammsediments aus einer Abwasserbehandlung von Farb- und Lackabwässern und/oder Beschichtungsstoffe und/oder flüssige Sonderabfälle, wobei das Filtrierhilfsmittel in einer vorbestimmten Konzentration von etwa 0,1 - etwa 3%, insbesondere etwa 0,5 - etwa 3%, insbesondere etwa 1 bis etwa 3%, durch Anschwemmung auf Filtertücher der Kammerfilterpressen eingebracht wird insbesondere mit einer Schichtdicke des Filtrierhilfsmittels auf dem Filtertuch von etwa 0,5 bis etwa 3 mm vor dem Einbringen des zu reinigenden Fällungsschlammsediments.

7. Verfahren zum Filtern von Fällungsschlammsediments aus einer Abwasserbehandlung in Kammerfilterpressen, wobei vor der Einbringung des Fällungsschlammsediments eine Anschwemmschicht eines Filtrierhilfsmittels in einer vorbestimmten Konzentration auf Filtertücher der Kammerfilterpressen insbesondere in einer Schichtdicke von etwa 0,5 bis etwa 3 mm aufgebracht wird, insbesondere mit Hilfe eines Umschaltmittels an einem Zulauf zu der Kammerfilterpresse, insbesondere mit Hilfe von ansteuerbaren Ventilen und/oder ansteuerbaren Schiebern in einem Zulauf der Kammerfilterpresse.

8. Verfahren nach Anspruch 7, **dadurch gekennzeichnet, dass** nach der Einbringung der Filtrierhilfsmittelschicht in einer Übergangsphase eine insbesondere kontinuierliche Zuleitung eines Gemisches von Filtrierhilfsmittel und Fällungsschlammsediment erfolgt oder durch das unterbrechungsfreie Umschalten von entsprechenden Ventilen und/oder Schieberstellungen ein unterbrechungsfreier Übergang zwischen Einbringung der Filtrierhilfsmittelschicht und Einbringen des Fällungssedimentschlammes erfolgt und anschließend in einer Entwässerungsphase insbesondere ausschließlich Fällungsschlammsediment in die Kammerfilterpresse eingeleitet und gepresst wird, insbesondere bis zu einem Prozessdruck von etwa 16 bar.

9. Verfahren nach einem der Ansprüche 7 bis 8, **dadurch gekennzeichnet, dass** der Fällungsschlammsediment eine Temperatur im Bereich von etwa 5 - etwa 50°C aufweist.

10. Verfahren nach einem der Ansprüche 7 bis 9, **dadurch gekennzeichnet, dass** der Fällungsschlammsediment bei einer Filtrationsgeschwindigkeit in der Anschwemmung von etwa 100 - 800 l/m²· h eingebracht wird.
